(19) Europäisches Patentamt
European Patent Office
Office européen des brevets

(11) Veröffentlichungsnummer: **0 010 273 B1**

(12) **EUROPÄISCHE PATENTSCHRIFT**

(45) Veröffentlichungstag der Patentschrift: **27.04.83**

(51) Int. Cl.³: **C 09 B 29/33,** D 06 P 1/00, C 08 K 5/00, D 21 H 3/00, C 07 D 235/04

(21) Anmeldenummer: **79103941.5**

(22) Anmeldetag: **12.10.79**

(54) **Monoazoverbindungen der Acetoacetylaminobenzimidazolonreihe, Verfahren zu ihrer Herstellung und ihre Verwendung.**

(30) Priorität: **21.10.78 DE 2845947**

(43) Veröffentlichungstag der Anmeldung: **30.04.80 Patentblatt 80/9**

(45) Bekanntmachung des Hinweises auf die Patenterteilung: **27.04.83 Patentblatt 83/17**

(84) Benannte Vertragsstaaten: **CH DE FR GB**

(56) Entgegenhaltungen:
**DE-A-1 808 017**
**FR-A-2 083 534**
**US-A-4 080 321**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt/Main 80 (DE)**

(72) Erfinder: **Hunger, Klaus, Dr., Johann-Strauss-Strasse 35, D-6233 Kelkheim (Taunus) (DE)**
Erfinder: **Pesenacker, Manfred, Dr., Gundelhardtstrasse 2, D-6233 Kelkheim (Taunus) (DE)**

EP 0 010 273 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Monoazoverbindungen der Acetoacetylaminobenzimidazolonreihe, Verfahren zu ihrer Herstellung und ihre Verwendung

Gegenstand der Erfindung sind Azoverbindungen der Formel I

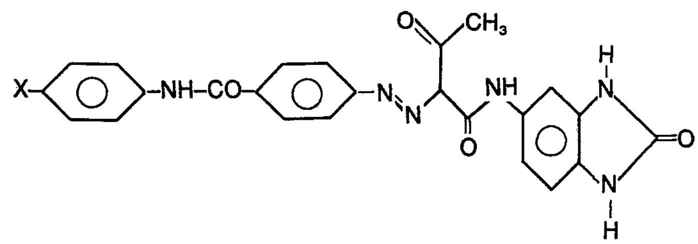

I

in der X Carbamoyl, Acetylamino oder Chlor bedeutet.

Die Erfindung betrifft weiterhin ein Verfahren zur Herstellung der genannten Azoverbindungen, das dadurch gekennzeichnet ist, dass man Verbindungen der Formel II

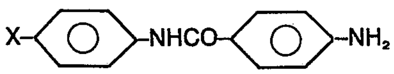

II

in der X die obengenannte Bedeutung aufweist, diazotiert und die erhaltenen Diazoniumverbindungen mit 5-Acetoacetylaminobenzimidazolon-(2), beispielsweise im wässrigen Medium, vereinigt.

Die Erfindung betrifft weiterhin die Verwendung der erfindungsgemässen Azoverbindungen als Farbmittel, insbesondere als Pigmente.

Die Diazotierung des Amins der Formel II kann beispielsweise mit Alkalinitriten oder niederen Alkylnitriten mit ausreichend starken Säuren, insbesondere einer Mineralsäure, aber auch mit Nitrosylschwefelsäure erfolgen. Es kann hierbei als auch bei der anschliessenden Kupplung von Nutzen sein, einen Zusatz von oberflächenaktiven Mitteln zu verwenden, wie zum Beispiel nichtionogenen, anionaktiven oder kationaktiven Dispergiermitteln.

Diazotierung und Kupplung können auch in Gegenwart geeigneter organischer Lösemittel durchgeführt werden, wie zum Beispiel Eisessig, niederen Alkanolen, Dioxan, Formamid, Dimethylformamid, Dimethylsulfoxid, Pyridin oder N-Methylpyrrolidon. Zur Erzielung der vollen Farbstärke und einer besonders günstigen Kristallstruktur ist es oft zweckmässig, das Kupplungsgemisch einige Zeit zu erhitzen, beispielsweise zu kochen oder unter Druck bei Temperaturen über 100 °C zu halten, gegebenenfalls in Gegenwart von organischen Lösemitteln, wie niederen Alkanolen, beispielsweise Äthanol, Halogenaromaten wie Chlorbenzol oder Dichlorbenzole, z.B. o-Dichlorbenzol, Dimethylformamid oder in Gegenwart von Harzseife. Besonders reine und farbstarke Pigmente erhält man mit den erfindungsgemässen Produkten, wenn man nach der Kupplung die feuchten Presskuchen oder die getrockneten Pulver einer thermischen Nachbehandlung mit organischen Lösemitteln, wie Alkoholen, vor allem niederen Alkanolen, Pyridin, Eisessig, Dimethylformamid, N-Methylpyrrolidon, Dimethylsulfoxid, Halogenaromaten wie Chlorbenzol oder Dichlorbenzolen, z.B. o-Dichlorbenzol, oder Nitrobenzol unterwirft oder eine Mahlung der Pigmente unter Zusatz von Mahlhilfsmitteln anschliesst.

Der Begriff «nieder» im Zusammenhang mit Alkylresten umfasst Gruppen mit 1 bis 6, insbesondere 1 bis 4 C-Atomen.

Die Herstellung der Pigmente kann auch in Gegenwart eines Trägermaterials, beispielsweise von Schwerspat, erfolgen.

Die neuen Verbindungen sind wasserunlöslich und unlöslich in den üblichen organischen Lösemitteln und eignen sich zur Pigmentierung von Druckfarben, Farblacken und Dispersionsanstrichfarben, zum Färben von Kautschuk, Kunststoffen und natürlichen oder synthetischen Harzen. Insbesondere sind sie zusätzlich für die Einfärbung solcher Kunststoffe, wie z.B. Polyolefine, geeignet, deren Verarbeitungstemperatur häufig über 250 °C liegt. Sie sind ferner geeignet für den Pigmentdruck auf Substraten, insbesondere Textilfasermaterialien oder anderen flächenförmigen Gebilden, wie beispielsweise Papier.

Die Pigmente können auch für andere Anwendungsgebiete, z.B. in fein verteilter Form zum Anfärben von Kunstseide aus Viskose oder Celluloseäthern bzw. -estern, Polyamiden, Polyglykolterephthalaten oder Polyacrylnitrilen in der Spinnmasse oder zum Färben von Papier verwendet werden.

Die Pigmente lassen sich in den genannten Medien gut verarbeiten. Die Färbungen weisen sehr gute Lichtechtheiten und insbesondere hervorragende Hitzestabilität auf und sind gegen den Einfluss von Chemikalien, vor allem Lösemitteln, beständig. Ausserdem zeichnen sich die erfindungsgemässen Pigmente durch einwandfreie Überlackierechtheit in Lacken und Ausblutechtheit in Kunststoffen aus.

Aus der US-A-4 080 321 sind Monoazopigmente bekannt, die durch Diazotieren von gegebenenfalls substituierten Benzoylaminoanilinen und Kuppeln auf Acetoacetylaminobenzimidazolon erhalten werden.

In den folgenden Beispielen beziehen sich die Prozentangaben auf das Gewicht.

Beispiel 1

38,5 g 4-(4'-Amino-benzoylamino)-benzamid werden in einem Gemisch aus 300 ml Wasser und

60 ml 31%iger Salzsäure bei 20 °C 12 Stunden angerührt. Dann stellt man mit Eis auf 5 °C, gibt langsam 20 ml einer 40%igen Natriumnitritlösung unter die Oberfläche zu und rührt 45 Minuten bei 5–10 °C. Darauf wird mit Amidosulfonsäure der Nitritüberschuss zerstört. Gleichzeitig werden in einem zweiten Gefäss 36 g 5-Acetoacetylaminobenzimidazolon-(2) in 300 ml Wasser angeschlämmt und durch Zugabe von 30 ml 33%iger Natronlauge gelöst.

Diese Lösung läuft unter gutem Rühren bei 15–20 °C zu einem vorgelegten Gemisch aus 250 ml Wasser, 25 ml Eisessig, 300 ml 4n Natriumacetatlösung und 5 ml einer 10%igen Lösung des Reaktionsproduktes von Stearylalkohol und 25 Mol Äthylenoxid in 30 Minuten unter die Oberfläche zu. Die so entstandene Suspension der Kupplungskomponente rührt man 30 Minuten nach.

Darauf erfolgt der Zulauf der Suspension der Diazokomponente bei 20 °C zur Suspension der Kupplungskomponente. Nach beendetem Zulauf rührt man 1 Stunde bei Raumtemperatur nach, heizt dann die Pigmentsuspension auf 90 °C, hält das Gemisch 1 Stunde bei dieser Temperatur, filtriert heiss und wäscht mit Wasser salzfrei.

Um bessere anwendungstechnische Eigenschaften zu erzielen, wird das bei 65 °C getrocknete und nachfolgend gemahlene Rohpigment in Dimethylformamid angerührt, auf 80 °C gebracht und innerhalb von 30 Minuten auf 125 °C erwärmt, dann abgesaugt, mit Methanol und Wasser gewaschen, getrocknet und gemahlen. Man erhält ein rotstichiggelbes Monoazopigment der Struktur

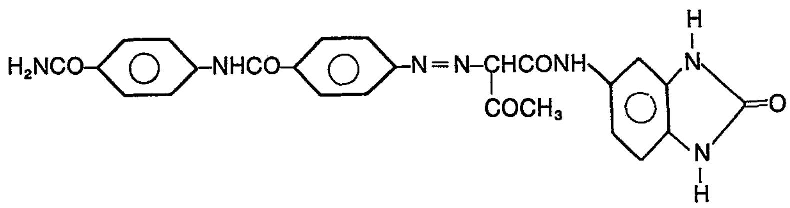

Dieses ergibt beim Einarbeiten in einen Alkydharz-Melaminharz-Klarlack transparente Färbungen mit einwandfreier Überlackierechtheit und hervorragender Lichtechtheit. Mit dem Pigment eingefärbtes Niederdruckpolyäthylen zeichnet sich durch sehr hohe Hitzebeständigkeit aus.

Beispiel 2

25 g 4-(4′-Aminobenzoylamino)-chloranilin werden in 250 ml N-Methylpyrrolidon eingetragen und 20 Minuten verrührt. Man gibt 40 ml 31%iger Salzsäure zu und stellt die Temperatur durch Aussenkühlung auf 10 °C ein. Das Gemisch rührt man 30 Minuten. Dann werden bei maximal 15 °C in 20 Minuten 20 ml 5n Natriumnitritlösung zugetropft, die zuvor mit Wasser auf 150 ml verdünnt werden. Zu dieser Lösung gibt man eine Lösung von 24 g 5-Acetoacetylaminobenzimidazolon-(2) in 250 ml N-Methylpyrrolidon.

Das Gemisch rührt man 40 Minuten bei max. 15 °C nach; anschliessend werden 300 ml 2n Natriumacetatlösung innerhalb 1 Stunde zugetropft, und es wird 1 weitere Stunde nachgerührt. Dann heizt man mit Wasserdampf auf 95 °C und hält die Mischung 30 Minuten bei dieser Temperatur, kühlt dann auf 50 °C ab, filtriert das Produkt ab, wäscht es mit Äthanol und Wasser, trocknet es bei 65 °C und mahlt es. Es werden 42,0 g eines rotstichiggelben Monoazopigmentes der folgenden Struktur erhalten:

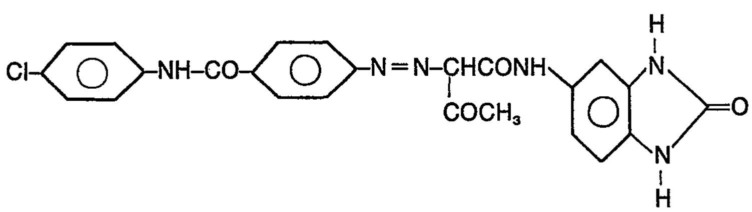

Beim Einarbeiten in einen Alkydharz-Melaminharz-Klarlack werden transparente Färbungen mit einwandfreier Überlackierechtheit und sehr guter Lichtechtheit erhalten. Mit dem Pigment eingefärbtes Niederdruckpolyäthylen zeichnet sich durch sehr hohe Hitzebeständigkeit aus.

Beispiel 3

27 g 4-(4′-Aminobenzoylamino)-1-acetylaminobenzol werden in einem Gemisch aus 50 ml Eisessig und 40 ml 31%iger Salzsäure bei Raumtemperatur 1 Stunde angerührt. Dann setzt man 400 ml Wasser zu, stellt die Temperatur durch Zugabe von Eis auf 0 °C ein und diazotiert durch langsames Zutropfen von 14 ml einer 40%igen Natriumnitritlösung unter die Oberfläche des Gemisches bei 0–5 °C. Es wird 30 Minuten bei 5–10 °C nachgerührt und anschliessend der Überschuss an Nitrit mit Amidosulfonsäure zerstört.

Gleichzeitig werden in einem zweiten Gefäss 25 g 5-Acetoacetylaminobenzimidazolon-(2) in 300 ml Wasser angeschlämmt und durch Zugabe von 20 ml 33%iger Natronlauge gelöst. Diese Lösung läuft unter gutem Rühren bei 15–18 °C zu einem vorgelegten Phosphatpuffer (pH 6–7), der 10 ml einer 10%igen Lösung des Reaktionsproduktes von Stearylalkohol und 25 Mol Äthylenoxid enthält. Die so entstandene Suspension rührt man 30 Minuten nach.

Anschliessend lässt man die Suspension der Diazokomponente unter die Oberfläche der Suspension der Kupplungskomponente zulaufen. Die Temperatur wird durch Eis bei 20–23 °C gehalten. Nach beendetem Zulauf rührt man 1 Stunde bei Raumtemperatur nach, heizt auf 90 °C, hält die Mischung 1 Stunde bei dieser Temperatur, kühlt dann mit Eis auf 70 °C, filtriert und wäscht den Filterrückstand mit Wasser salzfrei. Das getrocknete und gemahlene Rohpigment wird 30 Minuten bei Raumtemperatur in Eisessig homogenisiert, dann 20 Minuten bei 80–85 °C gerührt, abfiltriert und mit Äthanol und nachfolgend mit Wasser gewaschen. Nach dem Trocknen bei 70 °C erhält man ein gelbes Pigment mit rotstichiger Nuance der Struktur:

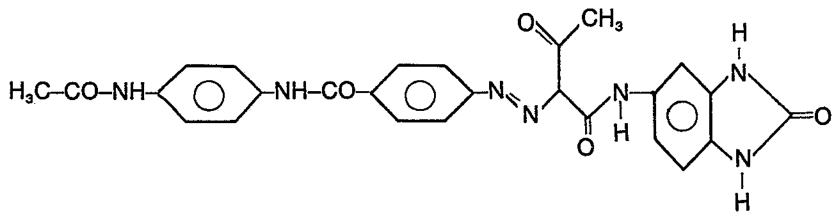

Dieses Pigment gibt beim Einarbeiten in einen Alkydharz-Melaminharz-Klarlack transparente Färbungen mit einwandfreier Überlackierechtheit und guter Lichtechtheit. Mit dem Pigment eingefärbtes Niederdruckpolyäthylen zeichnet sich durch sehr hohe Hitzebeständigkeit bei sehr guter Lichtechtheit aus.

## Patentansprüche

1. Verbindungen der allgemeinen Formel

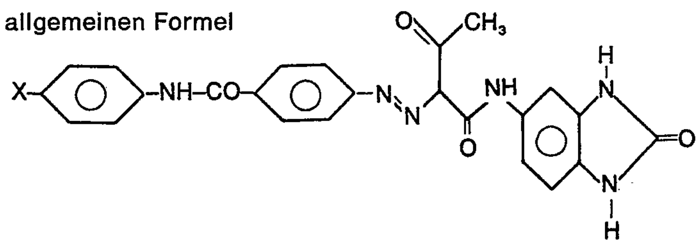

I

in der X Carbamoyl, Acetylamino oder Chlor bedeutet.

2. Verfahren zur Herstellung der Verbindung gemäss Anspruch 1, dadurch gekennzeichnet, dass man Verbindungen der allgemeinen Formel

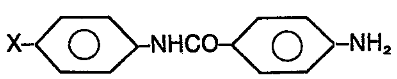

in der X die im Anspruch 1 genannten Bedeutungen hat, diazotiert und die erhaltenen Diazoniumverbindungen mit 5-Acetoacetylaminobenzimidazolon-(2) kuppelt.

3. Verwendung der Verbindungen gemäss Anspruch 1 als Farbmittel.

4. Verwendung der Verbindungen gemäss Anspruch 1 als Pigmente.

5. Verwendung der Verbindungen gemäss Anspruch 1 zum Färben bzw. Bedrucken von Kunststoffen, natürlichen und synthetischen Harzen, Kautschuk, Papier, Viskoseseide, Zelluloseestern bzw. -äthern, Polyolefinen, Polyurethanen, Polyacrylnitril oder Polyglykolterephthalaten sowie zur Herstellung von Druckfarben, Lackfarben oder Dispersionsanstrichfarben.

## Claims

1. Compounds of the general formula

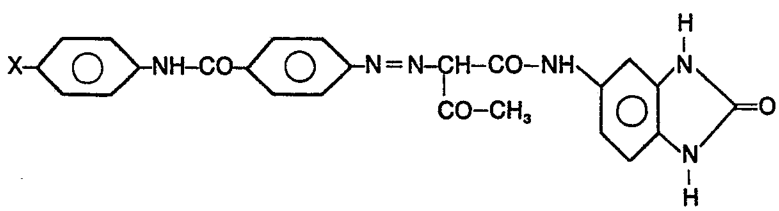

wherein X is carbamoyl, acetoamino or chloro.

2. Process for the preparation of the compounds according to claim 1, characterized by diazotizing compounds of the general formula

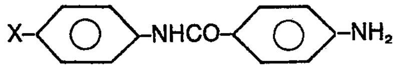

wherein X is as defined in claim 1, and coupling the so-obtained diazonium compounds with 5-acetoacetylaminobenzimidazolone-(2).

3. Use of the compounds according to claim 1 as colorants.

4. Use of the compounds according to claim 1 as pigments.

5. Use of the compounds according to claim 1 for the dyeing of and printing on plastics, natural and synthetic resins, rubber, paper, viscose rayon, cellulose esters and ethers, polyolefines, polyurethanes, polyacrylonitrile or polyglycolterephthalates, as well as for the preparation of printing inks, lacquers and emulsion paints.

## Revendications

1. Composés répondant à la formule générale:

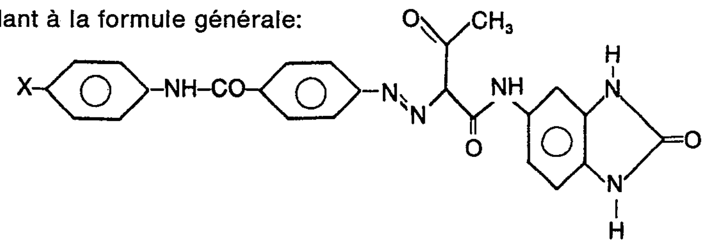

I

dans laquelle X représente un radical carbamoyle ou acétylamino ou le chlore.

2. Procédé de préparation des composés selon la revendication 1, procédé caractérisé en ce qu'on diazote des composés répondant à la formule générale:

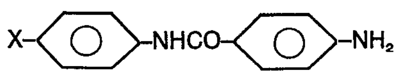

dans laquelle X a la signification donnée à la revendication 1, et on copule les composés de diazoniums obtenus avec l'acétoacétylamino-5 benzimidazolone-2.

3. Application des composés selon la revendication 1 comme colorants.

4. Application des composés selon la revendication 1 comme pigments.

5. Application des composés selon la revendication 1 pour la teinture ou l'impression de matières plastiques, de résines naturelles ou synthétiques, du caoutchouc, du papier, de la rayonne viscose, d'esters ou d'éthers cellulosiques, de polyoléfines, de polyuréthanes, du polyacrilonitrile ou de poly-(téréphthalates de glycols) ainsi que pour la préparation d'encres d'imprimerie, de peintures-émail ou de peintures-dispersions.